# EUROPÄISCHE PATENTANMELDUNG

(11) **EP 4 246 635 A1**
(43) Veröffentlichungstag der Anmeldung: **20.09.2023**
(21) Anmeldenummer: 23156704.1
(22) Anmeldetag: 15.02.2023
(51) Int. Cl.: H01M 8/18, H01M 8/04082, H01M 8/04276

(54) **REDOX-FLUSSBATTERIE MIT VORRICHTUNG ZUR VERBESSERTEN ELEKTROLYTDURCHMISCHUNG IN DEN TANKS**

(30) Priorität: 16.02.2022 DE 102022201610
(71) Anmelder: Kermi GmbH, 94447 Plattling (DE)
(72) Erfinder: Petzenhauser, Patrick, 94522 Wallersdorf (DE); Leibrecht, Florian, 94554 Moos (DE); Wyrobek, Michael, 94447 Plattling (DE)
(74) Vertreter: Patentanwälte Bressel und Partner mbB

(57) **Zusammenfassung**

Die Erfindung betrifft eine Redox-Flussbatterie (1), mit mindestens einer Zelle (2), dadurch gekennzeichnet, dass in Tanks (3,4) zur Speicherung von Elektrolytflüssigkeiten (5,6) jeweils zumindest eine Lanze (3-1,4-1,3-2,4-2) für einen Vorlauf der Elektrolytflüssigkeit (5,6) zu der mindestens einen Zelle (1) und/oder für einen Rücklauf der Elektrolytflüssigkeit (5,6) von der mindestens einen Zelle (2) angeordnet ist, wobei entlang einer Erstreckungsrichtung der mindestens einen Lanze (3-1,3-2,4-1,4-2) innerhalb der Tanks (3,4) jeweils mehrere in einer Wandung der mindestens Lanze (3-1,3-2,4-1,4-2) angeordnete Löcher (10) ausgebildet sind.

## Beschreibung

Die Erfindung betrifft eine Redox-Flussbatterie.

Eine Redox-Flussbatterie, welche auch als Flüssigbatterie, Nasszelle oder nach dem Englischen als Redox-Flow-Batterie bezeichnet wird, ist eine Ausführungsform eines Akkumulators. Die Redox-Flussbatterie kann zukünftig eine große Bedeutung bei der Speicherung elektrischer Energie aus regenerativen Energiequellen erlangen, da sie fluktuierende Energien wie Sonnen- und/oder Windenergie speichern und bei Bedarf wieder abgeben kann. Ein die Redox-Flussbatterie charakterisierendes Merkmal ist, dass die Speicherung der chemischen Energie nicht wie üblich in einem Feststoff, sondern in einem flüssigen Elektrolyten erfolgt. Dieser lagert in der Regel in zwei separaten Tanks und kann bei Bedarf in einer Zelle der Redox-Flussbatterie umgesetzt werden. In einem Inneren der Zelle befinden sich zwei Elektroden, eine Anode und eine Kathode. Eine, insbesondere ionenleitende, Membran trennt beziehungsweise unterteilt die Zelle in zwei Halbzellen, dabei ist jeweils eine Elektrode in jeweils einer der Halbzellen angeordnet.

Ein häufig verwendeter Typ der Redox-Flussbatterie ist die Vanadium-Redox-Flussbatterie, bei welcher in beiden Elektrolyten, also dem Elektrolyten, welcher an einer Anode vorbeifließt, sowie dem Elektrolyten, welcher an einer Kathode vorbeifließt, Vanadiumverbindungen enthalten sind. Beim Entladen der Redox-Flussbatterie findet dann an der Anode folgende Oxidation statt: V²⁺↔HV³⁺+e⁻. An der Kathode findet beim Entladen folgende Reduktion statt: VO²⁺+2H⁺+e⁻↔VO²⁺+H₂O. An der Anode werden Elektronen zur Verfügung gestellt, welche die Kathode aufnimmt, wodurch ein Strom zwischen beiden Elektroden fließt. Aufgrund der jeweiligen Elektrodenreaktion entsteht zwischen den beiden Halbzellen ein Ladungsungleichgewicht, weshalb ein Ladungsaustausch durch die Membran stattzufinden hat. Diese Reaktion ist bei der Redox-Flussreaktion umkehrbar, sodass die Redox-Flussbatterie wieder aufgeladen werden kann. In der Regel umfasst solch eine Redox-Flussbatterie nicht nur eine Zelle, sondern es sind mehrere Zellen zu einem sogenannten Stack zusammengefasst, wodurch beispielsweise ein Vielfaches an Leistung erreicht werden kann.

Um eine maximale Kapazität der Redox-Flussbatterie zu erreichen, wird angestrebt, möglichst den gesamten flüssigen Elektrolyten beim Laden und Entladen umzusetzen.

Daher ist es wichtig, dass sich in den Tanks keine toten Zonen bilden können, in denen sich Elektrolytflüssigkeit befindet, die nicht durch die Zelle gepumpt wird und deren Ladung daher nicht verändert werden kann.

Aus der DE 10 2010 004 942 A1 ist eine Redox-Flusszelle bekannt, bei der in den Tanks zur Lagerung der Elektrolytflüssigkeiten Rührer mit Rührblättern vorgesehen sind.

Der Erfindung liegt die Aufgabe zu Grunde, eine Redox-Flussbatterie im Hinblick auf eine Durchmischung der Elektrolytflüssigkeiten in den Tanks und einer Vermeidung von toten Zonen in den Tanks zu verbessern.

Die Aufgabe wird erfindungsgemäß durch eine Redox-Flussbatterie mit den Merkmalen des Patentanspruchs 1 gelöst. Vorteilhafte Ausgestaltungen der Erfindung ergeben sich aus den Unteransprüchen.

Insbesondere wird eine Redox-Flussbatterie geschaffen, mit mindestens einer Zelle, wobei in Tanks zur Speicherung von Elektrolytflüssigkeiten jeweils zumindest eine Lanze für einen Vorlauf der Elektrolytflüssigkeit zu der mindestens einen Zelle und/oder für einen Rücklauf der Elektrolytflüssigkeit von der mindestens einen Zelle angeordnet ist, wobei entlang einer Erstreckungsrichtung der mindestens einen Lanze innerhalb der Tanks jeweils mehrere in einer Wandung der mindestens Lanze angeordnete Löcher ausgebildet sind.

Die Redox-Flussbatterie ermöglicht es, die Elektrolytflüssigkeiten derart aus dem Tank zu entnehmen (Vorlauf vom Tank zur Zelle) und/oder derart zurückzuführen (Rücklauf von der Zelle zum Tank), dass in dem Tank eine turbulente Strömung entsteht, welche zu einer Durchmischung der Elektrolytflüssigkeit im gesamten Tank führt. Hierdurch kann insbesondere das Entstehen von toten Zonen innerhalb des Tanks verhindert werden, sodass eine Ladung der gesamten Elektrolytflüssigkeit für das Laden/Entladen zur Verfügung steht. Dies wird dadurch erreicht, dass jeder Tank der Redox-Flussbatterie zumindest eine Lanze für einen Vorlauf und/oder einen Rücklauf aufweist, über die die Elektrolytflüssigkeit entnommen bzw. wieder zurückgeführt wird. Die mindestens eine Lanze ist insbesondere langgestreckt und innen hohl bzw. als Hohlkörper ausgebildet und weist entlang einer Erstreckungsrichtung der mindestens einen Lanze innerhalb der Tanks jeweils mehrere in einer Wandung der Lanzen angeordnete Löcher auf, durch die die Elektrolytflüssigkeit beim Vorlauf vom Tank in die Lanze eintritt (auch als Vorlauflanze bezeichnet) und durch die beim Rücklauf die Elektrolytflüssigkeit vom Inneren der Rücklauflanze in den Tank austritt (auch als Rücklauflanze bezeichnet). Jeder der Tanks der Redox-Flussbatterie weist zumindest eine derartige Lanze für einen Vorlauf und/oder einen Rücklauf auf. Insbesondere weist jeder der Tanks zumindest eine derartige Lanze für den Rücklauf auf (Rücklauflanze). Durch die mehreren Löcher in der Wandung der mindestens einen Lanze wird die turbulente Strömung in den Tanks erzeugt, welche zu einer effizienten Durchmischung der jeweiligen Elektrolytflüssigkeit führt. Die turbulente Strömung wird insbesondere durch das jeweilige Austreten bzw. Eintreten der Elektrolytflüssigkeit durch die Löcher hindurch erzeugt, da sich im Bereich der einzelnen Löcher durch die auftretenden Volumenströme Verwirbelungen bilden, die sich in das Innere des Tanks fortpflanzen und somit im gesamten Tank zu einer turbulenten Strömung und effektiven Durchmischung führen.

Ein Vorteil der offenbarten Redox-Flussbatterie ist, dass innerhalb der Tanks keine beweglichen Teile notwendig sind, um eine Durchmischung und insbesondere eine turbulente Strömung zu erzeugen. Ferner sind die Lanzen einfach herzustellen und können auf einfache Weise in den Tanks angeordnet und an und/oder in diesen befestigt werden. Es kann beispielsweise vorgesehen sein, dass die Lanzen in die Tanks eingeschoben und mit dem jeweiligen Tank verschraubt werden. Es ist aber auch möglich, die Lanzen mit den Tanks fest zu verschweißen (nachträglich) oder die Lanzen bereits bei der Herstellung der Tanks in diese zu integrieren.

Die Redox-Flussbatterie weist mindestens eine Zelle auf. Es kann jedoch auch vorgesehen sein, dass mehrere Zellen zu einem Stapel (Stack) zusammengefasst sind. Einem Stack sind dann mehrere Zellen und zwei Tanks mit den Elektrolytflüssigkeiten zugeordnet. In jedem der beiden Tanks ist dann zumindest eine Lanze angeordnet.

Die Löcher in den Wandungen der Lanzen sind beispielsweise in regelmäßigen oder unregelmäßigen Abständen über eine Längserstreckungsrichtung der Lanzen verteilt angeordnet.

Die Lanzen sind beispielsweise aus einem geeigneten Kunststoff ausgebildet oder umfassen einen solchen Kunststoff. Beispielsweise können Polyethylen (PE) oder Polypropylen (PP) verwendet werden. Grundsätzlich eignen sich aufgrund ihrer Medienbeständigkeit aber auch Polyvinylchlorid (PVC-U, PVC-C), Polycarbonat (PC), Polymethylmethacrylat (PMMA), Polyvinylidenfluorid (PVDF) und Ethylen-Tetrafluorethylen-Copolymer (ETFE). Die Lanzen können weitere Elemente zur mechanischen Fixierung und/oder Schnittstellenelemente zum Anbinden an einen Pumpkreislauf und zum Abdichten aufweisen, wie beispielsweise Schraubverschlüsse, Einlegeteile, Dichtungen, Überwurfmuttern etc. Es kann auch vorgesehen sein, dass derartige Einzelteile miteinander verschweißt sind oder verschweißt werden oder bereits bei der Fertigung des jeweiligen Tanks miteingebracht und fest mit diesem verbunden werden.

In einer Ausführungsform ist vorgesehen, dass in den Tanks jeweils zumindest eine Lanze für einen Vorlauf der Elektrolytflüssigkeit zu der mindestens einen Zelle und jeweils zumindest eine Lanze für einen Rücklauf der Elektrolytflüssigkeit von der mindestens einen Zelle angeordnet sind. Hierdurch kann das Erzeugen der turbulenten Strömung innerhalb der Tanks und eine Durchmischung der jeweiligen Elektrolytflüssigkeiten weiter gesteigert werden, da sowohl die Vorlauflanze als auch die Rücklauflanze hierzu beitragen. Die Lanzen sind insbesondere an gegenüberliegenden Seiten des jeweiligen Tanks angeordnet. Hierdurch kann eine turbulente Strömung in einem gesamten Tankvolumen erzeugt werden. Bei einem rechteckigen oder quadratischen Querschnitt des Tanks, kann auch vorgesehen sein, dass die Lanzen in gegenüberliegenden Ecken (bzw. entlang der Ecken) angeordnet sind.

In einer Ausführungsform ist vorgesehen, dass die Lanzen zylinderförmig ausgebildet sind. Insbesondere umfassen die Lanzen einen Hohlzylinder. Hierdurch können Standardbauteile, insbesondere (Standard-)Rohre, verwendet werden, um die Lanzen auszubilden. Zum Herstellen einer Lanze wird ein Rohr beispielsweise mit Bohrungen zum Ausbilden der Löcher versehen. Die Löcher sind insbesondere in einer Mantelfläche des Hohlzylinders ausgebildet.

In einer Ausführungsform ist vorgesehen, dass die Lanzen an einem im Tankinneren endenden Ende verschlossen sind. Hierdurch kann erreicht werden, dass die Elektrolytflüssigkeit ausschließlich durch die in den Lanzen angeordneten Löcher hindurchtritt.

In einer Ausführungsform ist vorgesehen, dass die Lanzen vertikal im Tank angeordnet sind und sich zumindest über einen Großteil einer Höhe der Tanks erstrecken. Hierdurch kann die Elektrolytflüssigkeit über eine gesamte Höhe bzw. eine gesamte Erstreckungsrichtung des Tanks entnommen (Vorlauf) bzw. zurückgeführt (Rücklauf) werden. Insbesondere ermöglicht dies das Ausbilden einer turbulenten Strömung über ein gesamtes Tankvolumen.

In einer Ausführungsform ist vorgesehen, dass die Löcher an jeweils einander gegenüberliegenden Seiten der Wandung der Lanzen ausgebildet sind. Hierdurch kann die Elektrolytflüssigkeit auf beiden (Längs-)Seiten der Lanzen ein- bzw. austreten. Das Ausbilden der turbulenten Strömung kann hierdurch weiter verbessert werden.

In einer Ausführungsform ist vorgesehen, dass Durchtrittsrichtungen durch die Löcher jeweiliger Lanzen für den Vorlauf und Lanzen für den Rücklauf der Tanks zueinander parallel angeordnet sind. Hierdurch kann die turbulente Strömung besonders effektiv erzeugt werden. Anders ausgedrückt sind die Löcher der Vorlauflanze und der Rücklauflanze eines Tanks in dieser Ausführungsform insbesondere im Wesentlichen einander zugewandt angeordnet.

In einer Ausführungsform ist vorgesehen, dass Durchtrittsrichtungen zumindest eines Teils der Löcher jeweiliger Lanzen der Tanks in Richtung einer parallel zu den Lanzen verlaufenden Tankmittenachse oder Tankmittenfläche weisen und auf dieser senkrecht stehen. Hierdurch können das Erzeugen der turbulenten Strömung und das Durchmischen weiter verbessert werden. Insbesondere kann vorgesehen sein, dass ein Volumenstrom in Richtung Tankmittenachse oder Tankmittenflächen (bei Löchern an gegenüberliegenden Seiten zusätzlich auch in Richtung einer Stirnwand der Tanks) geleitet wird bzw. aus dieser Richtung "abgesaugt" wird. Hierdurch wird sichergestellt, dass eine möglichst große Anzahl an Flüssigkeitsteilchen im Tank bewegt und durchmischt wird. Insbesondere bei Vergrößerung der Tanks entlang einer Längsseite zur Steigerung einer Speicherkapazität kann eine Durchmischung hierdurch verbessert werden. Die Tankmittenfläche unterteilt insbesondere eine in Bezug auf die Abmessungen des Tanks längere Seite in zwei gleiche Teile.

In einer Ausführungsform ist vorgesehen, dass Querschnittsflächen der Löcher in den Lanzen derart gewählt sind, dass ein von den Lanzen jeweils geführter Volumenstrom sich gleichmäßig auf die Löcher der jeweiligen Lanze aufteilt oder ein jeweiliger Volumenstrom durch die Löcher zumindest aneinander angeglichen ist. Hierdurch kann beim Vorlauf und/oder Rücklauf über die gesamte Länge einer Lanze der gleiche oder zumindest ein angeglichener Volumenstrom durch die Löcher erzeugt werden. Dies fördert die gleichmäßige Durchmischung und das Ausbilden der turbulenten Strömung im gesamten Tank, insbesondere über eine gesamte Höhe des Tanks. Beim Wählen der Querschnittsflächen der Löcher kommen insbesondere strömungsphysikalische Aspekte der Hydrodynamik zum Einsatz, um gleiche Volumenströme an den einzelnen Löchern zu erzielen. Hierbei können empirische Versuche und/oder Simulationen zum Einsatz kommen, um eine optimale Anzahl von Löchern und/oder optimale Querschnittsflächen zu finden. Beispielsweise kann vorgesehen sein, einen Startwert für einen Durchmesser bzw. eine Querschnittsfläche eines Lochs an einem Ende einer Lanze vorzugeben und anhand von empirischen Versuchen und/oder von Simulationen die Durchmesser bzw. Querschnittsflächen der restlichen Löcher zu bestimmen.

In einer Ausführungsform ist vorgesehen, dass Querschnittsflächen der Löcher in den Lanzen zumindest gruppenweise oder abschnittsweise unterschiedlich sind.

In einer weiteren Ausführungsform ist vorgesehen, dass eine Querschnittsfläche der Löcher der Lanzen für den Vorlauf in Richtung eines im Tankinneren endenden Endes zumindest gruppenweise oder abschnittsweise zunimmt und eine Querschnittsfläche der Löcher der Lanzen für den Rücklauf in Richtung eines im Tankinneren endenden Endes zumindest gruppenweise oder abschnittsweise abnimmt. Bei betriebsgemäßen Gebrauch bedeutet dies insbesondere, dass eine Querschnittsfläche der Löcher der Vorlauflanze mit zunehmender Eintauchtiefe in die Elektrolytflüssigkeit zumindest gruppenweise oder abschnittsweise zunimmt und eine Querschnittsfläche der Löcher der Rücklauflanzen mit zunehmender Eintauchtiefe in die Elektrolytflüssigkeit zumindest gruppenweise oder abschnittsweise abnimmt. Hierdurch wird erreicht, dass ein geführter Volumenstrom über die gesamte Länge der Lanze gleich ist oder zumindest angeglichen werden kann.

In einer Ausführungsform ist vorgesehen, dass die Löcher einen kreisrunden Querschnitt aufweisen, wobei Durchmesser der kreisrunden Löcher der Vorlauflanzen zumindest gruppenweise oder abschnittsweise ein Verhältnis zueinander von 5:9:13 aufweisen und Durchmesser der kreisrunden Löcher der Rücklauflanzen zumindest gruppenweise oder abschnittsweise ein Verhältnis zueinander von 13:9:6 aufweisen. Bei zylinderförmigen Lanzen mit einem inneren Durchmesser von 20 mm können kreisrunde Löcher der Vorlauflanzen beispielsweise die folgenden Durchmesser aufweisen: 5 mm, 9 mm, 13 mm. Entsprechend können die kreisrunden Löcher der Rücklauflanze die folgenden Durchmesser aufweisen: 13 mm, 9 mm, 6 mm. Grundsätzlich können auch andere Verhältnisse gewählt werden, sofern hierdurch ein Volumenstrom durch die einzelnen Löcher einer Lanze angeglichen werden kann.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Redox-Flussbatterie;
- Fig. 2: eine schematische Darstellung eines Tanks und darin angeordneter Lanzen in einer Ausführungsform der Redox-Flussbatterie (Seitenansicht);
- Fig. 3: eine schematische Darstellung des Tanks und darin angeordneter Lanzen in der Ausführungsform der Redox-Flussbatterie (Draufsicht);
- Fig. 4a, b: schematische Darstellungen einer Ausführungsform der Vorlauflanze in einer Seitenansicht und in einer perspektivischen Ansicht;
- Fig. 5a, b: schematische Darstellungen einer Ausführungsform der Rücklauflanze in einer Seitenansicht und in einer perspektivischen Ansicht.

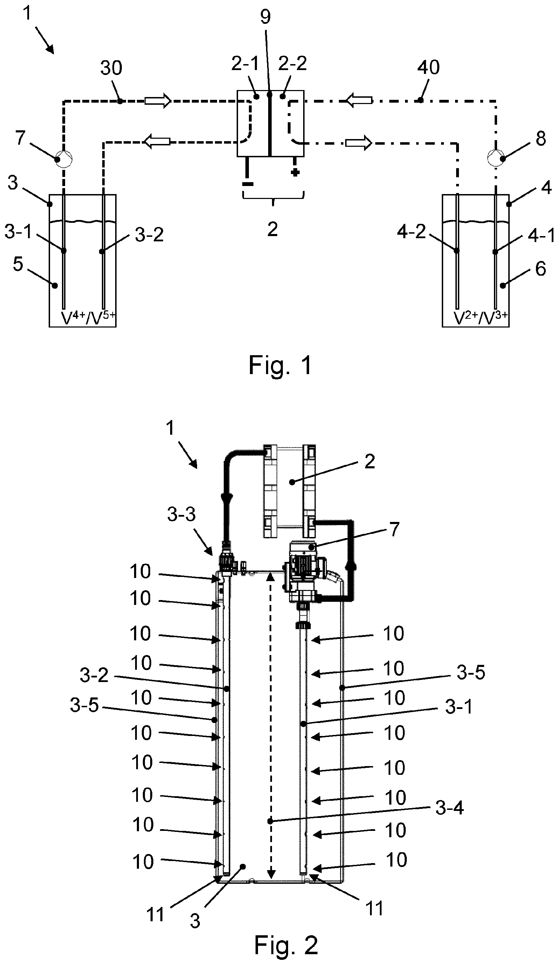

Die Fig. 1 zeigt eine schematische Darstellung einer Ausführungsform der Redox-Flussbatterie 1. Die Redox-Flussbatterie 1 umfasst eine Zelle 2 und zwei Tanks 3, 4 mit jeweils einer Elektrolytflüssigkeit 5, 6. Vorliegend ist nur eine Zelle 2 gezeigt, grundsätzlich kann die Redox-Flussbatterie 1 aber auch mehrere Zellen 2 umfassen, die zu einem (Zell-)Stack zusammengefasst sind. Die Elektrolytflüssigkeiten 5, 6 werden mittels Pumpen 7, 8 in zwei getrennten Kreisläufen 30, 40 der Zelle 2 zugeführt und anschließend wieder in die Tanks 3, 4 zurückgeführt. In einem Inneren der Zelle 2 befinden sich zwei Elektroden, eine Anode - und eine Kathode +. Eine, insbesondere ionenleitende, Membran 9 trennt beziehungsweise unterteilt die Zelle 2 in zwei Halbzellen 2-1, 2-2, dabei ist jeweils eine Elektrode +, - in jeweils einer der Halbzellen 2-1, 2-2 angeordnet. Jeder Halbzelle 2-1, 2-2 ist einer der Tanks 3, 4 bzw. einer der Kreisläufe 30, 40 zugeordnet. Zum Laden und Entladen wird die Redox-Flussbatterie 1 in an sich bekannter Weise betrieben, insbesondere gemäß der in der Beschreibungseinleitung beschriebenen Art und Weise, sodass hier nicht näher darauf eingegangen wird.

Im gezeigten Beispiel enthalten beide Elektrolytflüssigkeiten 5, 6 Vanadiumverbindungen, welche jeweils in unterschiedlichen Ladungszuständen vorliegen können. Grundsätzlich können jedoch auch andere geeignete Elektrolyte verwendet werden.

In den Tanks 3, 4 zur Speicherung der Elektrolytflüssigkeiten 5, 6 ist jeweils eine Vorlauflanze 3-1, 4-1 für einen Vorlauf der Elektrolytflüssigkeit 5, 6 zu der Zelle 2 und eine Rücklauflanze 3-2, 4-2 für einen Rücklauf der Elektrolytflüssigkeit 5, 6 von der Zelle 2 in den Tank 3, 4 angeordnet. Entlang einer Erstreckungsrichtung der Lanzen 3-1, 3-2, 4-1, 4-2 innerhalb der Tanks 3, 4 sind jeweils mehrere in einer Wandung der Lanzen 3-1, 3-2, 4-1, 4-2 angeordnete Löcher 10 ausgebildet.

Dies ist schematisch in der Fig. 2 dargestellt, welche lediglich einen Tank 3 und einen Kreislauf 30 darstellt. Die Löcher 10 sind in regelmäßigen Abständen an den Lanzen 3-1, 3-2 angeordnet. Die Vorlauflanze 3-1 ist mit der Pumpe 7 verbunden, beispielsweise über eine Standard-Schnittstelle mit dieser verschraubt. Die Pumpe 7 erstreckt sich teilweise in den Tank 3 hinein, sodass die Vorlauflanze 3-1 etwas kürzer ist als die Rücklauflanze 3-2, welche mit einer Schnittstelle an einer Oberseite 3-3 des Tanks 3 verbunden, insbesondere verschraubt, ist.

In der gezeigten Ausführungsform der Redox-Flussbatterie 1 sind jeweils zwei Lanzen 3-1, 3-2, 4-1, 4-2 pro Tank 3, 4 vorgesehen. Grundsätzlich ist jedoch auch die Verwendung nur einer Lanze 3-1, 3-2, 4-1, 4-2 oder weiterer Lanzen pro Tank 3,4 möglich. Insbesondere kann hierbei jeweils eine Rücklauflanze 3-2, 4-2 pro Tank 3, 4 als einzige Lanze pro Tank vorgesehen sein.

Es ist insbesondere vorgesehen, dass die Lanzen 3-1, 3-2 zylinderförmig ausgebildet sind. Insbesondere bilden die Lanzen 3-1, 3-2 jeweils einen Hohlzylinder aus bzw. sind hohlzylinderartig ausgebildet. Die Lanzen 3-1, 3-2 können beispielsweise als wesentlichem Bestandteil ein (Kunststoff-)Rohr umfassen, in das beispielsweise Bohrungen zum Ausbilden der Löcher 10 eingebracht sind.

Es ist insbesondere vorgesehen, dass die Lanzen 3-1, 3-2 an einem im Tankinneren endenden Ende 11 verschlossen sind. Beispielsweise kann ein geeigneter (Kunststoff-)Stopfen hierzu verwendet werden.

Es ist insbesondere vorgesehen, dass die Lanzen 3-1, 3-2 vertikal im Tank 3 angeordnet sind und sich zumindest über einen Großteil einer Höhe 3-4 des Tanks 3 erstrecken.

Die Vorlauflanze 3-1 weist in dem gezeigten Beispiel insbesondere acht Löcher 10 auf. Die Rücklauflanze 3-2 weist in dem gezeigten Beispiel insbesondere zehn Löcher auf. Je nach Größe des Tanks 3 und/oder Anforderungen an einen Volumenstrom und/oder eine verfügbare Pumpleistung der Pumpe 7 können auch mehr oder weniger Löcher 10 vorgesehen sein.

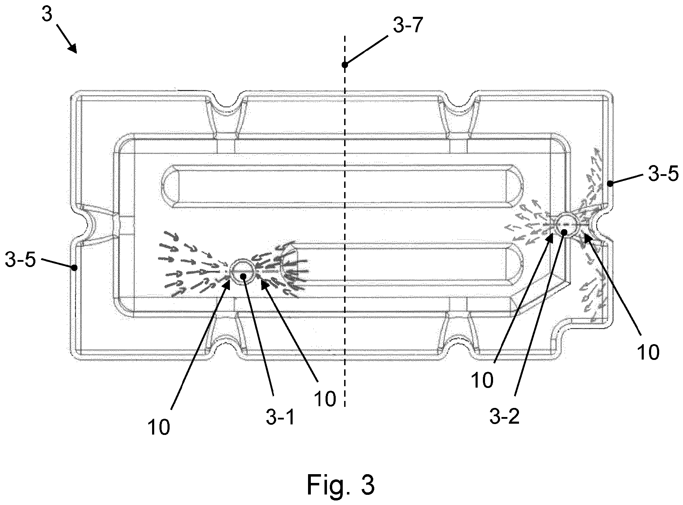

Die jeweiligen Löcher 10 der beiden Lanzen 3-1, 3-2 sind auf einander gegenüberliegenden Seiten der Lanzen 3-1, 3-2 angeordnet. Insbesondere ist vorgesehen, dass Durchtrittsrichtungen durch die Löcher 10 der Lanze 3-1 für den Vorlauf und der Lanze 3-2 für den Rücklauf zueinander parallel angeordnet sind. Insbesondere weist ein Teil der Löcher 10 in den Lanzen 3-1, 3-2 jeweils zu einer nächstliegenden Stirnwand 3-5 des Tanks 3 und ein anderer Teil der Löcher 10 in Richtung einer parallel zu den Lanzen 3-1, 3-2 verlaufenden Tankmittenfläche 3-7, welche eine Längsausdehnungsrichtung (Länge) des Tanks 3 in zwei gleichgroße Teile unterteilt. Die Durchtrittsrichtungen der Löcher 10 sind schematisch in der Fig. 3 verdeutlicht, welche eine schematische Darstellung einer Draufsicht auf den Tank 3 zeigt. Die Durchtrittsrichtungen der Löcher stehen hierbei insbesondere senkrecht auf der Stirnwand 3-5 und/oder der Tankmittenfläche 3-7. Beim Ansaugen und Einströmen durch die Löcher 10 hervorgerufene Richtungen der Volumenströme sind hierbei durch Pfeile schematisch angedeutet. Der andere Tank 4 (Fig. 1) und die anderen Lanzen 4-1, 4-2 sind in gleicher Weise ausgebildet.

Es kann vorgesehen sein, dass Querschnittsflächen der Löcher 10 in den Lanzen 3-1, 3-2 (und der Lanzen 4-1, 4-2 des anderen Tanks 4, Fig. 1) derart gewählt sind, dass ein von den Lanzen 3-1, 3-2 jeweils geförderter Volumenstrom sich gleichmäßig auf die Löcher 10 der jeweiligen Lanze 3-1, 3-2 aufteilt oder ein jeweiliger Volumenstrom durch die Löcher 10 zumindest aneinander angeglichen ist.

Insbesondere kann hierzu vorgesehen sein, dass Querschnittsflächen der Löcher 10 in den Lanzen 3-1, 3-2 zumindest gruppenweise oder abschnittsweise unterschiedlich sind.

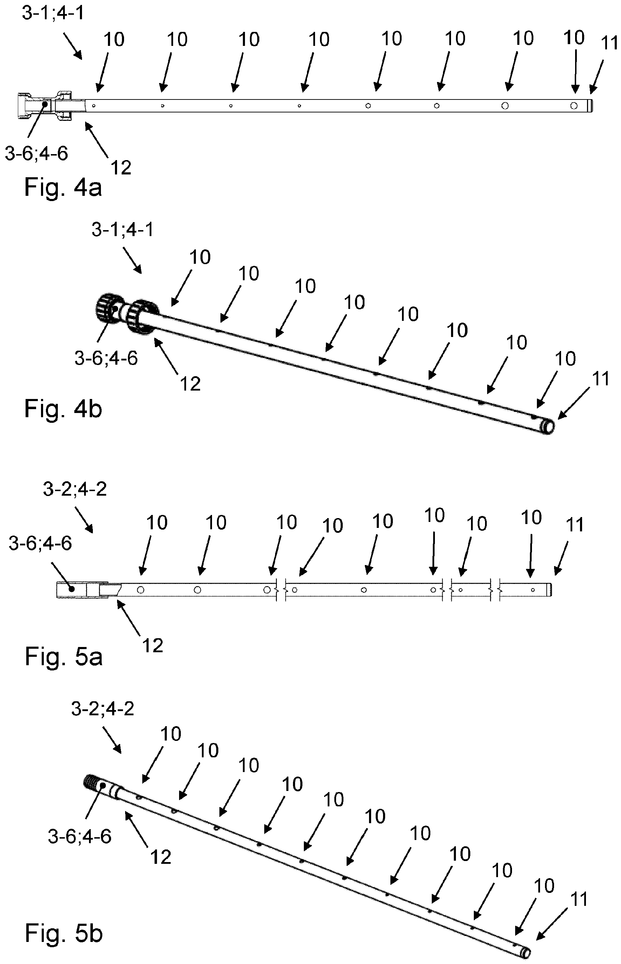

Die Figuren 4a, 4b, 5a und 5b zeigen schematische Darstellungen von Ausführungsformen der Vorlauflanzen 3-1, 4-1 und der Rücklauflanzen 3-2, 4-2, jeweils in einer Seitenansicht und in einer perspektivischen Ansicht. Die Lanzen 3-1, 3-2, 4-1, 4-2 umfassen in diesen Ausführungsformen im Wesentlichen ein (Kunststoff-)Rohr. An einem im Tankinneren endenden Ende 11 ist das Rohr geschlossen, beispielsweise mittels eines (Kunststoff-)Stopfens. Am anderen Ende 12 sind Schnittstellenelemente 3-6, 4-6 angeordnet, um die Lanzen 3-1, 3-2, 4-1, 4-2 jeweils mit den Kreisläufen zu verbinden und am Tank zu fixieren.

Zum Erzeugen eines angeglichenen Volumenstroms durch alle Löcher 10 ist bei dieser Ausführungsform vorgesehen, dass eine Querschnittsfläche der Löcher 10 der Vorlauflanzen 3-1, 4-1 in Richtung eines im Tankinneren endenden Endes 11 zumindest gruppenweise oder abschnittsweise zunimmt (vgl. Fig. 4a) und eine Querschnittsfläche der Löcher 10 der Rücklauflanzen 3-2, 4-2 in Richtung eines im Tankinneren endenden Endes 11 zumindest gruppenweise oder abschnittsweise abnimmt (vgl. Fig. 5a).

Insbesondere ist bei dieser Ausführungsform vorgesehen, dass die Löcher 10 einen kreisrunden Querschnitt aufweisen, wobei Durchmesser der kreisrunden Löcher 10 der Vorlauflanzen 3-1, 4-1 zumindest gruppenweise oder abschnittsweise ein Verhältnis zueinander von 5:9:13 aufweisen und Durchmesser der kreisrunden Löcher 10 der Rücklauflanzen 3-2, 4-2 zumindest gruppenweise oder abschnittsweise ein Verhältnis zueinander von 13:9:6 aufweisen. Grundsätzlich können jedoch auch andere geeignete Verhältnisse vorgesehen sein.

Bei einem inneren Durchmesser der Vorlauflanzen 3-1, 4-1 von 20 mm können beispielsweise die folgenden Anzahlen und Durchmesser für kreisrunde Löcher 10 in Richtung des im Tankinneren endenden Endes 11 vorgesehen sein: vier Löcher 10 in einem Abstand von jeweils 135 mm mit einem Durchmesser von 5 mm, zwei Löcher 10 bei gleichem Abstand mit einem Durchmesser von 9 mm und zwei Löcher 10 bei gleichem Abstand mit einem Durchmesser von 13 mm. Die Vorlauflanzen 3-1, 4-1 haben dann eine Gesamtlänge zwischen den Schnittstellenelementen 3-6, 4-6 an den Enden 12 und den Enden 11 von etwa 950 mm. Grundsätzlich können die Löcher 10 bei gleichen Querschnittsflächen auch andere Formen aufweisen; kreisrunde Löcher 10 bieten jedoch bei der Herstellung Vorteile, da diese mittels Bohrungen hergestellt werden können.

Bei einem inneren Durchmesser der Rücklauflanzen 3-2, 4-2 von 20 mm können beispielsweise die folgenden Anzahlen und Durchmesser für kreisrunde Löcher 10 in Richtung des im Tankinneren endenden Endes 11 vorgesehen sein: drei Löcher 10 in einem Abstand von jeweils 135 mm mit einem Durchmesser von 13 mm, drei Löcher 10 bei gleichem Abstand mit einem Durchmesser von 9 mm und vier Löcher 10 bei gleichem Abstand mit einem Durchmesser von 13 mm. Die Rücklauflanzen 3-2, 4-2 haben dann eine Gesamtlänge zwischen Schnittstellenelementen 3-6, 4-6 und den Enden 11 von etwa 1300 mm. Grundsätzlich können die Löcher 10 bei gleichen Querschnittsflächen auch andere Formen aufweisen; kreisrunde Löcher 10 bieten jedoch bei der Herstellung Vorteile, da diese mittels Bohrungen hergestellt werden können.

Die angegebenen Maße der Lanzen 3-1, 3-2, 4-1, 4-2 und Löcher 10 sowie eine Anzahl der Löcher 10 sind lediglich beispielhaft genannt und können bei anderen Ausführungsformen, insbesondere bei anderen Größen und/oder Formen der Tanks, anders ausgestaltet sein.

### Bezugszeichenliste

- 1: Redox-Flussbatterie
- 2: Zelle
- 2-1: Halbzelle
- 2-2: Halbzelle
- 3: Tank
- 3-1: Vorlauflanze
- 3-2: Rücklauflanze
- 3-3: Oberseite (des Tanks)
- 3-4: Höhe (des Tanks)
- 3-5: Stirnwand (des Tanks)
- 3-6: Schnittstellenelement
- 3-7: Tankmittenfläche
- 4: Tank
- 4-1: Vorlauflanze
- 4-2: Rücklauflanze
- 4-6: Schnittstellenelement
- 5: Elektrolytflüssigkeit
- 6: Elektrolytflüssigkeit
- 7: Pumpe
- 8: Pumpe
- 9: Membran
- 10: Loch
- 11: Ende (im Tankinneren)
- 12: Ende
- 30: Kreislauf
- 40: Kreislauf
- +: Elektrode
- -: Elektrode

## Patentansprüche

1. Redox-Flussbatterie (1),
mit mindestens einer Zelle (2),
**dadurch gekennzeichnet, dass**
in Tanks (3,4) zur Speicherung von Elektrolytflüssigkeiten (5,6) jeweils zumindest eine Lanze (3-1,4-1,3-2,4-2) für einen Vorlauf der Elektrolytflüssigkeit (5,6) zu der mindestens einen Zelle (1) und/oder für einen Rücklauf der Elektrolytflüssigkeit (5,6) von der mindestens einen Zelle (2) angeordnet ist, wobei entlang einer Erstreckungsrichtung der mindestens einen Lanze (3-1,3-2,4-1,4-2) innerhalb der Tanks (3,4) jeweils mehrere in einer Wandung der mindestens Lanze (3-1,3-2,4-1,4-2) angeordnete Löcher (10) ausgebildet sind.

2. Redox-Flussbatterie (1) nach Anspruch 1, **dadurch gekennzeichnet, dass** in den Tanks (3,4) jeweils zumindest eine Lanze (3-1,4-1) für einen Vorlauf der Elektrolytflüssigkeit (5,6) zu der mindestens einen Zelle (1) und jeweils zumindest eine Lanze (3-2,4-2) für einen Rücklauf der Elektrolytflüssigkeit (5,6) von der mindestens einen Zelle (2) angeordnet sind.

3. Redox-Flussbatterie (1) nach Anspruch 1 oder 2, **dadurch gekennzeichnet, dass** die Lanzen (3-1,3-2,4-1,4-2) zylinderförmig ausgebildet sind.

4. Redox-Flussbatterie (1) nach einem der vorangegangenen Ansprüche, **dadurch gekennzeichnet, dass** die Lanzen (3-1,3-2,4-1,4-2) an einem im Tankinneren endenden Ende (11) verschlossen sind.

5. Redox-Flussbatterie (1) nach einem der vorangegangenen Ansprüche, **dadurch gekennzeichnet, dass** die Lanzen (3-1,3-2,4-1,4-2) vertikal im Tank (3,4) angeordnet sind und sich zumindest über einen Großteil einer Höhe (3-4) der Tanks (3,4) erstrecken.

6. Redox-Flussbatterie (1) nach einem der vorangegangenen Ansprüche, **dadurch gekennzeichnet, dass** die Löcher (10) an jeweils einander gegenüberliegenden Seiten der Wandung der Lanzen (3-1,3-2,4-1,4-2) ausgebildet sind.

7. Redox-Flussbatterie (1) nach einem der vorangegangenen Ansprüche, **dadurch gekennzeichnet, dass** Durchtrittsrichtungen durch die Löcher (10) jeweiliger Lanzen (3-1,4-1) für den Vorlauf und Lanzen (3-2,4-2) für den Rücklauf der Tanks (3,4) zueinander parallel angeordnet sind.

8. Redox-Flussbatterie (1) nach einem der vorangegangenen Ansprüche, **dadurch gekennzeichnet, dass** Durchtrittsrichtungen zumindest eines Teils der Löcher (10) jeweiliger Lanzen (3-1,3-2,4-1,4-2) der Tanks (3,4) in Richtung einer parallel zu den Lanzen (3-1,3-2,4-1,4-2) verlaufenden Tankmittenachse oder Tankmittenfläche weisen und auf dieser senkrecht stehen.

9. Redox-Flussbatterie (1) nach einem der vorangegangenen Ansprüche, **dadurch gekennzeichnet, dass** Querschnittsflächen der Löcher (10) in den Lanzen (3,4) derart gewählt sind, dass ein von den Lanzen (3,4) jeweils geführter Volumenstrom sich gleichmäßig auf die Löcher (10) der jeweiligen Lanze (3,4) aufteilt oder ein jeweiliger Volumenstrom durch die Löcher zumindest aneinander angeglichen ist.

10. Redox-Flussbatterie (1) nach einem der vorangegangenen Ansprüche, **dadurch gekennzeichnet, dass** Querschnittsflächen der Löcher (10) in den Lanzen (3-1,3-2,4-1,4-2) zumindest gruppenweise oder abschnittsweise unterschiedlich sind.

11. Redox-Flussbatterie (1) nach einem der vorangegangenen Ansprüche, **dadurch gekennzeichnet, dass** eine Querschnittsfläche der Löcher (10) der Lanzen (3-1,4-1) für den Vorlauf in Richtung eines im Tankinneren endenden Endes (11) zumindest gruppenweise oder abschnittsweise zunimmt und eine Querschnittsfläche der Löcher (10) der Lauflanzen (3-2,4-2) für den Rücklauf in Richtung eines im Tankinneren endenden Endes (11) zumindest gruppenweise oder abschnittsweise abnimmt.
